# EUROPÄISCHE PATENTSCHRIFT

(11) **EP 1 846 643 B1**
(45) Veröffentlichungstag und Bekanntmachung des Hinweises auf die Patenterteilung: **15.08.2012**
(21) Anmeldenummer: 06706864.3
(22) Anmeldetag: 10.02.2006
(51) Int. Cl.: F01N 13/00, F01N 11/00

(54) **VERFAHREN ZUR POSITIONIERUNG EINES MESSFUEHLERS IN EINEM WABENKOERPER, ENTSPRECHENDES KRAFTFAHRZEUG**
METHOD FOR POSITIONING A SENSOR IN A HONEYCOMB ELEMENT, CORRESPONDING MOTOR VEHICLE
PROCEDE POUR LE POSITIONNEMENT D'UN CAPTEUR DANS UN ELEMENT EN NID D'ABEILLES, ET VEHICULE AUTOMOBILE CORRESPONDANT

(30) Priorität: 11.02.2005 DE 102005006262
(43) Veröffentlichungstag der Anmeldung: 24.10.2007
(73) Patentinhaber: Emitec Gesellschaft für Emissionstechnologie mbH, 53797 Lohmar (DE)
(72) Erfinder: ALTHÖFER, Kait, 51674 Wiehl (DE); BRÜCK, Rolf, 51429 Bergisch Gladbach (DE); HIRTH, Peter, 51503 Rösrath (DE)
(74) Vertreter: Rössler, Matthias
(86) Internationale Anmeldenummer: PCT/EP2006/001243
(87) Internationale Veröffentlichungsnummer: WO 2006/084742

(56) Entgegenhaltungen:
- DE-A1- 10 300 408
- DE-A1- 10 311 235
- DE-U1- 8 816 154
- US-A1- 2005 022 382

## Beschreibung

Gegenstand der vorliegenden Erfindung ist ein Verfahren zur Positionierung eines Messfühlers, insbesondere einer Lambdasonde, in einem Wabenkörper und ein Kraftfahrzeug, welches einen entsprechenden Wabenkörper umfasst. Die Wabenkörper werden insbesondere als Katalysator-Trägerkörper oder Filterkörper im Abgassystem von Kraftfahrzeugen wie beispielsweise Automobilen oder motorbetriebenen Zweirädern eingesetzt.

Wabenkörper werden als Katalysator-Trägerkörper und/oder Filterkörper in Abgassystemen, insbesondere von Automobilen, motorbetriebenen Zweirädern, Quads, Booten oder Luftfahrzeugen, eingesetzt und weisen zumindest teilweise für ein Fluid, insbesondere ein Abgas, durchströmbare Hohlräume auf. Oftmals weisen diese Abgassysteme auch Messfühler wie insbesondere Lambda- und/oder Regelsonden auf, die bevorzugt auch in einem Wabenkörper ausgebildet sein können, wie beispielsweise die DE 88 16 154 U1 zeigt. Beispielsweise ist aus der WO 02/075126 A1 ein Verfahren bekannt, wie bei einem Wabenkörper, der eine aus metallischen Lagen aufgebaute die Hohlräume umfassende Wabenstruktur aufweist, ein Messfühler so eingebracht werden kann, das möglichst geringe O-berflächenverluste beispielsweise für eine katalytisch aktive Beschichtung auftreten. Bei einem Wabenkörper, der eine keramische Wabenstruktur umfasst, sind verschiedene Verfahren zum Einbringen eines Hohlraums in die Wabenstruktur zur Aufnahme des Messfühlers bekannt, beispielsweise das Bohren eines Loches in die Wabenstruktur.

Bei all diesen Verfahren war jedoch bis jetzt unklar, wo der Messfühler positioniert werden muss, um ein Messergebnis des Messfühlers zu gewährleisten, das möglichst frei von systematischen Fehlern ist.

Aus der DE-A1-103 00 408 ist ein Wabenkörper zur Nachbehandlung des Abgases einer Verbrennungskraftmaschine bekannt, der eine Eintrittsfläche für Abgase, einer Austrittsfläche und eine von dem Abgas durchströmbare Wabenstruktur aufweist. Die Wabenstruktur dieses Wabenkörpers weist ein Speichermittel für mindestens eine Komponente des Abgases auf. Diese Komponente können beispielsweise Stickstoffoxide (NOx) sein. Darüber hinaus weist die Wabenstruktur einen Messfühler auf, der in einem Mindestabstand von der Austrittsfläche angeordnet ist. Mit diesem Messfühler kann die Konzentration der Komponente überwacht werden, so dass verhindert werden kann, dass die Komponente die Austrittsfläche erreicht.

Hiervon ausgehend liegt der vorliegenden Erfindung die Aufgabe zugrunde, die im Stand der Technik bekannten technischen Probleme zumindest teilweise zu lindern und insbesondere ein Verfahren zur Positionierung eines Messfühlers in einem Wabenkörper anzugeben, bei dem der Messfühler so positioniert wird, das mögliche auf der Position des Messfühlers im Wabenkörper beruhende systematische Fehler möglichst gering gehalten werden. Weiterhin soll ein Kraftfahrzeug mit einem entsprechenden Wabenkörper vorgeschlagen werden.

Diese Aufgaben werden gelöst durch ein Verfahren zur Positionierung eines Messfühlers mit den Merkmalen des Anspruchs 1 und einem Kraftfahrzeug mit den Merkmalen des Anspruchs 6. Vorteilhafte Weiterbildungen sind Gegenstand der jeweiligen abhängigen Ansprüche.

Bei dem erfindungsgemäßen Verfahren zur Positionierung eines Messfühlers in einem Wabenkörper, der für ein Abgas zumindest teilweise durchströmbare Hohlräume aufweist, wird der Messfühler in einem Bereich des Wabenkörpers positioniert, in dem im Betrieb des Wabenkörpers im Abgassystem eines Kraftfahrzeugs mindestens ein Minimum der Wasserstoffkonzentration vorliegt

Es hat sich gezeigt, das insbesondere Lambdasonden empfindlich auf die anliegende Wasserstoffkonzentration sind, dass also das von der Sonde gelieferte Messergebnis stark von der anliegenden Wasserstoffkonzentration abhängt. Um einen solchen systematischen Fehler möglichst klein und insbesondere eine zeitliche Schwankung dieses systematischen Fehlers des Messergebnisses möglichst gering zu halten, wird erfindungsgemäß vorgeschlagen, den Messfühler im Bereich des Wasserstoffminimums zu platzieren. Das Vorliegen eines solchen Minimums beruht auf der Vielzahl von chemischen Reaktionen, die insbesondere in einem Wabenkörper parallel ablaufen, der als Katalysator-Trägerkörper eingesetzt wird. Neben Reaktionen, in denen Wasserstoff verbraucht wird, beispielsweise bei der Oxidation von Sauerstoff oder bei der Reduktion von Stickstoffoxid, laufen auch Reaktionen ab, durch die Wasserstoff erzeugt wird wie beispielsweise die Shiftreaktion, bei der Kohlenmonoxid (CO) und Wasser (H₂O) zu Kohlendioxid (CO₂) und Wasserstoff (H₂) umgesetzt werden oder auch die Wasserdampfreformerreaktion.

Die Positionierung des Messfühlers im Minimum der Wasserstoffkonzentration führt in vorteilhafter Weise dazu, dass der durch die Querempfindlichkeit des Messfühlers auf Wasserstoff entstehende systematische Fehler möglichst gering gehalten wird. Überraschenderweise hat es sich gezeigt, dass auch eine Positionierung des Messfühlers im Rahmen des erfindungsgemäßen Verfarens leicht versetzt zum Wasserstoffkonzentrationsminimum eine erhebliche Reduktion des vorgenannten systematischen Fehlers bewirkt, so dass nicht nur eine Positionierung des Messfühlers am Minimum selbst sondern auch in einem Bereich um das Minimum vorteilhaft und erfindungsgemäß ist.

Die Lage des Minimums wird bestimmt, während der Wabenkörper einem Standardabgastest unterzogen wird wie beispielsweise dem EU Evaporative Emissions Test (SHED 2000), dem EU Type Approval Test "Type IV" oder der US Federal Test Procedure: In diesen Tests sind genaue Testzyklen und Details wie beispielsweise die Temperatur des Kraftstoffs, die Zusammensetzung des Kraftstoffs, Fahrgeschwindigkeit und ähnliches festgelegt.

Unter einem Kraftfahrzeug wird in dieser Anmeldung insbesondere ein Automobil, ein motorisiertes Zweirad oder Quad, ein Boot oder ein Fluggerät verstanden. Unter der Wasserstoffkonzentration wird insbesondere eine axiale Wasserstoffkonzentration verstanden, bei der insbesondere in einer radialen Richtung die Wasserstoffkonzentration gemittelt wird. Bei dem Wabenkörper kann es sich insbesondere um einen Katalysator-Trägerkörper und/oder um einen Filterkörper wie einen offenen Partikelfilter oder einen Dieselpartikelfilter insbesondere mit wechselseitig verschlossenen Kanälen handeln. Der Wabenkörper kann eine Wabenstruktur, die die Hohlräume umfasst oder bildet, in einem Mantelrohr umfassen. Als Position des Messfühlers wird insbesondere die Position einer Symmetrielinie oder einer Kante des Messfühlers verstanden. Unter einem Messfühler wird hier insbesondere eine Lambdasonde, eine Regelsonde, ein Temperatursensor und/oder ein Gaskonzentrationssensor, beispielsweise zur Bestimmung der Konzentration von Kohlenwasserstoffen oder Stickoxiden, verstanden.

Gemäß einer vorteilhaften Ausführung des erfindungsgemäßen Verfahrens erstreckt sich der Bereich in axialer Richtung um jeweils im wesentlichen 10% einer axialen Länge des Wabenkörpers um die Lage des Minimums.

Das heißt insbesondere, dass der Messfühler sowohl in einem Teilbereich einer Länge von im wesentlichen 10% der axialen Länge des Wabenkörpers in einer Richtung, als auch in einem weiteren Teilbereich einer Länge von im wesentlichen 10% der Länge des Wabenkörpers in einer zu der ersten Richtung entgegengesetzten Richtung ausgebildet ist. Bei mehreren Minima der Wasserstoffkonzentration wird insbesondere auf das tiefste Minimum in diesem Bereich Bezug genommen.

Gemäß einer weiteren vorteilhaften Ausführung des erfindungsgemäßen Verfahrens ist der Messfühler in einem Bereich von im wesentlichen 20 bis 60 mm (Millimeter), bevorzugt 30 bis 40 mm hinter einer Stirnseite, insbesondere einer gaseintrittsseitigen Stirnseite des Wabenkörpers ausgebildet.

Viele Wabenkörper weisen eine bevorzugte Durchströmungsrichtung auf, die beispielsweise durch die Ausbildung von strömgungsbeeinflussenden Strukturen in den Hohlräumen vorgegeben ist, so dass auch bei einem Wabenkörper, der nicht in einem Abgassystem eingebaut ist, von einer Gaseintrittsseite gesprochen werden kann. Überraschenderweise liegt bei einer großen Zahl von Wabenkörpern ein Minimum der Wasserstoffkonzentration im Bereich von im wesentlichen 20 bis 60 mm, bevorzugt 30 bis 40 mm hinter einer gaseintrittsseitigen Stirnseite des Wabenkörpers.

Erfindungsgemäß wird die Lage des Miminums in einem EU Evaporative Emissions Test (SHED 2000), einem EU Type Approval Test "Type IV" oder einer US Federal Test Procedure bestimmt.

Gemäß einer weiteren vorteilhaften Ausführung des erfindungsgemäßen Verfahrens dient es zur Positionierung mindestens einem der folgenden Messfühler:
a) Lambdasonde oder
b) Regelsonde.

Unter einer Regelsonde wird ein Messfühler verstanden, der Teil eines Regelkreislaufes ist. Eine Regelsonde kann die Funktionalität einer Lambdasonde umfassen oder eine Lambdasonde sein, wobei auch weitere oder andere Funktionen durch die Regelsonde durchgeführt werden könne. Beispielsweise, kann eine Regelsonde einen Temperatursensor und/oder einen Gaskonzentrationssensor, beispielsweise zur Bestimmung der Konzentration von Kohlenwasserstoffen oder Stickoxiden umfassen.

Gemäß einer weiteren vorteilhaften Ausführung des erfindungsgemäßen Verfahrens ist das Minimum absolut.

In Abhängigkeit von den Betriebsparametern des Wabenkörpers können mehrere Minima der Wasserstoffkonzentration auftreten, so dass der Messfühler bevorzugt im Bereich eines absoluten Wasserstoffkonzentrationsminimums ausgebildet wird.

Gemäß einem weiteren Aspekt des erfinderischen Gedankens wird ein Kraftfahrzeugmit den Merkmalen des Anspruch 6 vorgeschlagen. Dabei hat der Wabenkörper zumindest teilweise für ein Abgas durchströmbare Hohlräume, umfassend einen Messfühler, bei dem der Messfühler dort ausgebildet ist, wo im Betrieb des Wabenkörpers in einem Abgassystem eines Kraftfahrzeugs ein Minimum einer Wasserstoffkonzentration vorliegt.

Die Ausbildung des Messfühlers im Minimum bewirkt einen möglichst geringen systematischen Fehler aufgrund der Querempfindlichkeit des Messfühlers auf Wasserstoff. Bevorzugt ist die Ausbildung einer Lambda- oder Regelsonde als Messfühler. Das Minimum wird mit bekannten Testverfahren bestimmt wie dem EU Evaporative Emissions Test (SHED 2000), dem EU Type Approval Test "Type IV", oder der US Federal Test Procedure. Bevorzugt wird die Position des Messfühlers nach einem der vorstehend genannten Verfahren bestimmt.

Gemäß einer weiteren vorteilhaften Ausführung umfasst der Messfühler zumindest eine der folgenden Sonden:
a) Lambdasonde oder
b) Regelsonde.

Gemäß einer weiteren vorteilhaften Ausführung umfasst der Wabenkörper eine zumindest teilweise keramische und/oder metallische Wabenstruktur.

Hierbei kann die Wabenstruktur als keramischer Monolith, gegebenenfalls mit Einlagen beispielsweise aus Metall aufgebaut sein. Die Wabenstruktur kann auch aus zumindest teilweise strukturierten und gegebenenfalls im wesentlichen glatten Lagen aufgebaut sein, in dem beispielsweise ein zumindest teilweise strukturierte Lage spiralförmig aufgewickelt oder beispielsweise mindestens ein Stapel aus im wesentlichen glatten und zumindest teilweise strukturierten Lagen verwunden wird. Diese Lagen können Blechlagen, Faserlagen, insbesondere Faserlagen aus keramischen und/oder metallischen Fasern, sonstige poröse Lagen insbesondere metallische und/oder keramische poröse Lagen und Mischungen und/oder Kombinationen daraus umfassen. Die Wabenstruktur kann beispielsweise extrudiert, durch Rapid Prototyping Techniken aufgebaut oder gewickelt oder verwunden sein. Jegliche Wickel-, Verwindungs- und Extrudiertechniken sind möglich und erfindungsgemäß.

Unter einem Kraftfahrzeug wird in diesem Zusammenhang insbesondere ein Automobil, ein motorisiertes Zweirad oder Quad, ein Boot oder ein Fluggerät verstanden.

Dabei ist insbesondere ein Kraftfahrzeug mit einem Abgassystem gemeint, in dem mindestens eine Abgasreinigungskomponente umfassen einen solchen Wabenkörper angeordnet ist. Das Abgassystem umfasst in der Regel eine Verbrennungskraftmaschinen (z.B. einen Diesel- oder einen Otto-Motor), in der Abgase erzeugt werden, und eine Abgasleitung, durch die die Abgase in einer Strömungsrichtung hindurchgeführt und mit mindestens einer darin angeordneten Abgasreinigungskomponente (z.B. katalytischer Konverter, Filter, Partikelabscheider, Adsorber, etc.) zur Konvertierung oder Abtrennung von Schadstoffen in Kontakt gebracht werden. Dabei ist zumindest eine der Abgasreinigungskomponenten mit einem Wabenkörper der vorgenannten Art ausgebildet. Bevorzugt erfolgt die Anordnung des mindestens einen Messfühlers derart, dass die Position für das gewünschte Abgassystem mittels Testprozeduren und/oder durch Berechnung (z.B. mit computertechnischer Unterstützung) ermittelt wird.

Sämtliche Vorteile und Details, die für das erfindungsgemäße Verfahren offenbart wurden, sind auf einen Wabenkörper und ein erfindungsgemäßes Kraftfahrzeug übertrag- und anwendbar und jeweils umgekehrt.

Im folgenden wird die Erfindung anhand der Zeichnung nähe erläutert, wobei die Erfindung nicht auf die dort gezeigten, besonders bevorzugten, Ausführungsbeispiele und Vorteile beschränkt ist. Es zeigen:
- Fig. 1: schematisch ein erstes Beispiel eines Wabenkörpers;
- Fig. 2: schematisch einen Verlauf der Konzentration von Wasserstoff in einem Wabenkörper; und
- Fig.3: schematisch einen Ausschnitt eines Längsschnitts eines Wabenkörpers mit zugehöriger Längenachser nach dem erfindungsgemäßen Verfahren.

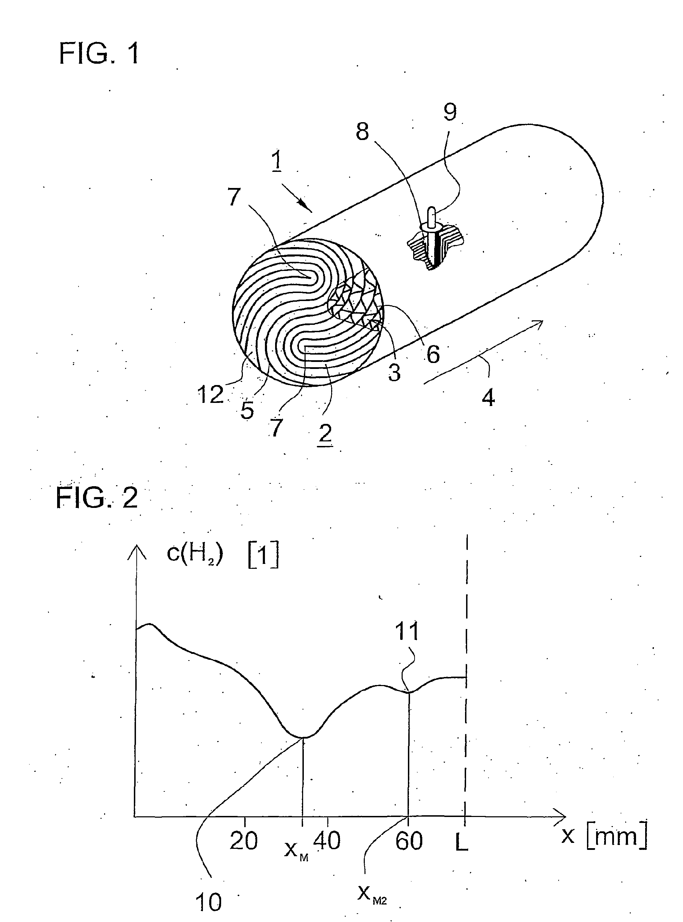

Fig. 1 zeigt schematisch ein erstes Beispiel eines Wabenkörpers 1. Dieser umfasst eine Wabenstruktur 2 mit zumindest teilweise für ein Fluid durchströmbaren Hohlräumen 3, die sich in einer axialen Richtung 4 des Wabenkörpers 1 erstrecken. Die Hohlräume 3 werden durch im wesentlichen glatte Lagen 5 und zumindest teilweise strukturierte Lagen 6 gebildet. Die zumindest teilweise strukturierten Lagen 6, die aus Gründen der Übersichtlichkeit nur in einem Teil des Querschnitts der Wabenstruktur 2 eingezeichnet sind, sind gewellt. Im wesentlichen glatt heißt in diesem Zusammenhang, dass die im wesentlichen glatte Lage 5 auch Strukturen aufweisen kann, deren Amplitude jedoch kleiner, bevorzugt wesentlich kleiner als die Strukturen in der zumindest teilweise strukturierten Lage 6 sind. Im vorliegenden Beispiel wurden die Lagen 5, 6 zu einem Stapel gestapelt und dieser dann um zwei Fixpunkte 7 verwunden.

Die Wabenstruktur 2 weist eine Messfühleraufnahme 8 auf, in die ein Messfühler 9 eingebracht ist. Als Messfühler 9 können insbesondere eine Lambdasonde, eine Regelsonde, ein Temperatursensor und/oder ein Gaskonzentrationssensor, beispielsweise zur Bestimmung der Konzentration von Kohlenwasserstoffen oder Stickoxiden, ausgebildet sein. Besonders bevorzugt ist eine Lambdasonde, die auch in einer Regelsonde umfasst sein kann. Der Messfühler 9 ist an einer Position ausgebildet, die im Bereich eines Minimums der Wasserstoffkonzentration im Betrieb des Wabenkörpers 1 in einem Abgassystem eines Kraftfahrzeugs liegt. Die Lage des Minimums in axialer Richtung 4 wird in einem der oben beschriebenen Tests bestimmt.

Fig. 2 zeigt schematisch und exemplarisch einen Verlauf der Konzentration von Wasserstoff c(H₂) in relativen Einheiten in einem Wabenkörper 1. Die Konzentration c ist gegen eine Koordinate x in axialer Richtung 4 aufgestragen. Der Wabenkörper 1 weist in diesem Beispiel eine Länge L von 70 mm auf. Der Verlauf der Konzentration c zeigt ein erstes Minimum 10 an der Minimalkoordinate x_{M}. Ein zweites Minimum 11 der Wasserstoffkonzentration c liegt an der zweiten Minimalkoordinate x_{M}2 vor. Die Minimalkoordinate x_{M} liegt im Bereich von 30 bis 40 mm hinter einer Stirnseite 12 des Wabenkörpers 1, die in dem in Figur 2 gezeigten Konzentrationsverlauf bei einer Koordinate x von null zu finden ist. Der Messfühler 9 ist im Bereich der Minimalkoordinate x_{M} des ersten Minimums 10 ausgebildet.

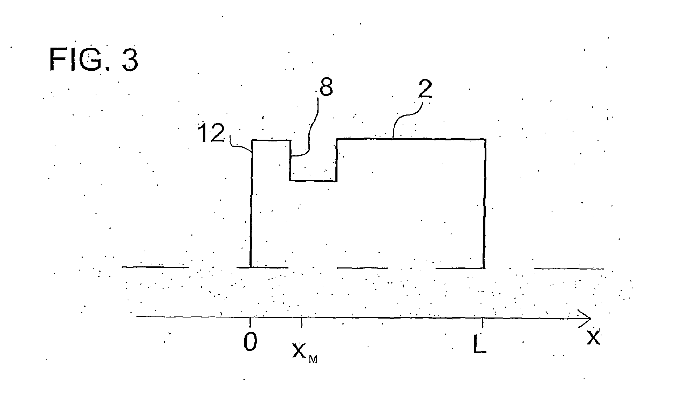

Fig. 3 zeigt schematisch einen Ausschnitt aus einem Längsschnitt einer Wabenstruktur 2 eines Wabenkörpers 1. Diese Wabenstruktur 2 ist in diesem Beispiel monolithisch aus Keramik ausgebildet, beispielsweise extrudiert, und weist eine Messfühleraufnahme 8 zur Aufnahme eines nicht eingezeichneten Messfühlers 9 auf. Die Messfühleraufnahme 8 und damit auch der Messfühler 9 liegen im Bereich der Minimalkoordinate x_{M}, wobei sich der Bereich bevorzugt um jeweils 10% der Länge L des Wabenkörpers um die Minimalkoordinate x_{M} in axialer Richtung 4 und in entgegengesetzter Richtung erstreckt. Der Messfühler 9 beziehungsweise die Messfühleraufnahme 8 liegen also in einem Bereich von x_{M}-L/10 < x < x_{M}+L/10. Die Position des Messfühlers 9 kann sich hierbei sowohl auf eine Kante des Messfühlers 9 als auch auf eine Symmetrieachse des Messfühlers 9 beziehen. Sofern der Messfühler 9 nicht rechtwinklig zur axialen Richtung 4, sondern in einem von 90° verschiedenen Winkel in die Wabenstruktur 2 eintritt, so ist der Messfühler 9 auch in den angegebenen bevorzugten Bereichen um die Minimalkoordinate x_{M} ausgebildet, wenn nur ein Teil des Messfühlers 9 in diesen Bereichen ausgebildet ist.

Das erfindungsgemäße Verfahren zum Positionieren eines Messfühlers 9 erlaubt es in vorteilhafter Weise, einen Messfühler 9 so in einem Wabenkörper 1 zu positionieren, dass auftretende systematische Fehler aufgrund einer bestehenden Querempfindlichkeit des Messfühlers 9 gegen Wasserstoff möglichst gering gehalten werden. Dies gilt insbesondere für Lambdasonden. Der Wabenkörper 1 umfasst somit einen Messfühler 9, der so positioniert ist, dass dieser besonders zuverlässige Messdaten liefert, deren systematischer Fehler möglichst gering ist.

### Bezugszeichenliste

1 Wabenkörper
2 Wabenstruktur
3 Hohlraum
4 axiale Richtung
5 im wesentlichen glatte Lage
6 zumindest teilweise strukturierte Lage
7 Fixpunkt
8 Messfühleraufnahme.
9 Messfühler
10 erstes Minimum
11 zweites Minimum
12 Stirnseite

- L: Länge Wabenkörper
- c: Wasserstoffkonzentration
- x_{M}: Minimalkoordinate
- x_{M}2: zweite Minimalkoordinate

## Patentansprüche

1. Verfahren zur Positionierung eines Messfühlers (9) in einem Wabenkörper (1), der für ein Abgas zumindest teilweise durchströmbare Hohlräume (3) aufweist, **dadurch gekennzeichnet, dass** der Messfühler (9) in einem Bereich des Wabenkörpers (1) positioniert wird, in dem im Betrieb des Wabenkörpers (1) im Abgassystem eines Kraftfahrzeugs ein Minimum (10, 11) der Wasserstoffkonzentration (c) vorliegt, wobei die Lage des Minimums (10, 11) in einem EU Evaporative Emissions Test (SHED 2000), einem EU Type Approval Test "Type IV" oder einer US Federal Test Procedure bestimmt wird.

2. Verfahren nach Anspruch 1, **dadurch gekennzeichnet, dass** sich der Bereich in axialer Richtung (4) um jeweils im wesentlichen 10% einer axialen Länge (L) des Wabenkörpers (1) um die Lage (x_{M}) des Minimums (10, 11) erstreckt.

3. Verfahren nach einem der vorhergehenden Ansprüche, **dadurch gekennzeichnet, dass** der Messfühler (9) in einem Bereich von im wesentlichen 20 bis 60 mm, bevorzugt 30 bis 40 mm hinter einer Stirnseite (12), insbesondere einer gaseintrittsseitigen Stirnseite (12) des Wabenkörpers (1) ausgebildet ist.

4. Verfahren nach einem der vorhergehenden Ansprüche, **dadurch gekennzeichnet, dass** es zur Positionierung mindestens einem der folgenden Messfühler (9) dient:
a) Lambdasonde, oder
b) Regelsonde.

5. Verfahren nach einem der vorhergehenden Ansprüche, **dadurch gekennzeichnet, dass** das Minimum (10, 11) absolut ist.

6. Kraftfahrzeug mit einer Verbrennungskraftmaschine und einem Abgassystem, in dem mindestens eine Abgasreinigungskomponente vorgesehen ist, die einen Wabenkörper (1) mit zumindest teilweise für ein Abgas durchströmbaren Hohlräumen (3) hat, umfassend einen Messfühler (9), **dadurch gekennzeichnet, dass** der Messfühler (9) dort ausgebildet ist, wo im Betrieb des Wabenkörpers (1) in einem Abgassystem eines Kraftfahrzeugs gemäß einem EU Evaporative Emissions Test (SHED 2000), einem EU Type Approval Test "Type IV" oder einer US Federal Test Procedure ein Minimum (10, 11) einer Wasserstoffkonzentration (c) vorliegt, also im Minimum (10, 11).

7. Kraftfahrzeug nach Anspruch 6 , **dadurch gekennzeichnet, dass** der Messfühler (9) zumindest eine der folgenden Sonden umfasst:
a) Lambdasonde; oder
b) Regelsonde.

8. Kraftfahrzeug nach einem der Ansprüche 6 oder 7 , **dadurch gekennzeichnet, dass** der Wabenkörper (1) eine zumindest teilweise keramische Wabenstruktur (2) und/oder eine zumindest teilweise metallische Wabenstruktur (2) umfasst.

## Claims

1. A method for positioning a measuring sensor (9) in a honeycomb body (1) which has cavities (3) which can be at least partially traversed by an exhaust gas, **characterized in that** the measuring sensor (9) is positioned in a region of the honeycomb body (1) in which, in operation of the honeycomb body (1) in the exhaust system of a motor vehicle, a minimum (10, 11) of the hydrogen concentration (c) is present, wherein the position of the minimum (10, 11) is determined in an EU Evaporative Emissions Test (SHED 2000), in an EU Type Approval Test "Type IV" or in a US Federal Test Procedure.

2. The method as claimed in claim 1, **characterized in that** the region extends around the position (x_{M}) of the minimum (10, 11) in the axial direction (4) in each case by substantially 10% of an axial length (L) of the honeycomb body (1).

3. The method as claimed in one of the preceding claims, **characterized in that** the measuring sensor (9) is formed in a region from substantially 20 to 60 mm, preferably 30 to 40 mm downstream of an end side (12), in particular of a gas-inlet-side end side (12), of the honeycomb body (1).

4. The method as claimed in one of the preceding claims, **characterized in that** said method serves for positioning at least one of the following measuring sensors (9):
a) lambda probe, or
b) control probe.

5. The method as claimed in one of the preceding claims, **characterized in that** the minimum (10, 11) is absolute.

6. Motor vehicle having a combustion engine and an exhaust system, in which at least one exhaust gas cleaning element is provided, which has a honeycomb body (1) having cavities (3) which can be at least partially traversed by an exhaust gas, comprising a measuring sensor (9), **characterized in that** the measuring sensor (9) is formed where in operation of the honeycomb body (1) in the exhaust system of a motor vehicle a minimum (10, 11) of a hydrogen concentration (c) is present pursuant to an EU Evaporative Emissions Test (SHED 2000), an EU Type Approval Test "Type IV" or an US Federal Test Procedure, thus in the minimum (10, 11).

7. Motor vehicle as claimed in claim 6, **characterized in that** the measuring sensor (9) comprises at least one of the following measuring probes:
a) lambda probe; or
b) control probe.

8. Motor vehicle as claimed in one of claims 6 or 7, **characterized in that** the honeycomb body (1) comprises an at least partially ceramic honeycomb structure (2) and/or an at least partially metallic honeycomb structure (2).

## Revendications

1. Procédé de positionnement d'une sonde de mesure (9) dans un corps (1) en nid d'abeilles qui présente des cavités (3) dont au moins une partie peut être traversée par un gaz d'échappement, **caractérisé en ce que** la sonde de mesure (9) est placée dans une partie du corps (1) en nid d'abeilles dans laquelle la concentration (c) en hydrogène dans le système d'échappement d'un véhicule automobile correspond à un minimum (10, 11) lorsque le corps (1) en nid d'abeilles est en fonctionnement et **en ce que** la position du minimum (10, 11) est déterminée par un test EU des émissions évaporatives (SHED 2000), un test d'approbation EU de type 4 ou une procédure fédérale de test US.

2. Procédé selon la revendication 1, **caractérisé en ce que** la partie s'étend dans la direction axiale (4) essentiellement sur 10 % de la longueur axiale (L) du corps (1) en nid d'abeilles autour de la position (x_{M}) du minimum (10, 11).

3. Procédé selon l'une des revendications précédentes, **caractérisé en ce que** la sonde de mesure (9) est formée dans une plage d'essentiellement 20 à 60 mm et de préférence de 30 à 40 mm en aval d'un côté frontal (12) du corps (1) en nid d'abeilles et en particulier de son côté frontal (12) situé du côté de l'entrée des gaz.

4. Procédé selon l'une des revendications précédentes, **caractérisé en ce qu'**au moins l'une des sondes de mesure (9) suivantes est utilisée pour le positionnement :
a) sonde lambda et
b) sonde de régulation.

5. Procédé selon l'une des revendications précédentes, **caractérisé en ce que** le minimum (10, 11) est absolu.

6. Véhicule automobile doté d'un moteur à combustion interne et d'un système de gaz d'échappement doté d'au moins un composant d'épuration des gaz d'échappement, qui présente un corps (1) en nid d'abeilles dont au moins une partie des cavités (3) peut être traversée par les gaz d'échappement et qui présente une sonde de mesure (9), **caractérisé en ce que** la sonde de mesure (9) est formée dons la position où, lorsque le corps (1) en nid d'abeilles est en fonctionnement, un minimum (10, 11) d'une concentration (c) en hydrogène prévaut dans le système d'échappement d'un véhicule automobile, déterminé par un test EU des émissions évaporatives (SHED 2000), un test d'approbation EU de type 4 ou une procédure fédérale de test US, à savoir un minimum (10, 11).

7. Véhicule automobile selon la revendication 6, **caractérisé en ce que** la sonde de mesure (9) comprend au moins l'une des sondes suivantes :
a) sonde lambda et
b) sonde de régulation.

8. Véhicule automobile selon l'une des revendications 6 ou 7, **caractérisé en ce que** le corps (1) en nid d'abeilles comprend une structure (2) en nid d'abeilles au moins en partie céramique ou structure (2) en nid d'abeilles au moins en partie métallique.
